# EUROPÄISCHE PATENTSCHRIFT

(11) **EP 2 953 810 B1**
(45) Veröffentlichungstag und Bekanntmachung des Hinweises auf die Patenterteilung: **21.06.2017**
(21) Anmeldenummer: 14702822.9
(22) Anmeldetag: 03.02.2014
(51) Int. Cl.: B60K 37/06

(54) **ERKENNEN VON MÖGLICHKEITEN ZUR VERBESSERUNG DER BEDIENUNG EINES FAHRZEUGS**
DETECTING POSSIBILITIES FOR IMPROVING THE OPERATOR CONTROL OF A VEHICLE
IDENTIFICATION DE POSSIBILITÉS D'AMÉLIORATION DE LA COMMANDE D'UN VÉHICULE

(30) Priorität: 06.02.2013 DE 102013201954
(43) Veröffentlichungstag der Anmeldung: 16.12.2015
(73) Patentinhaber: Bayerische Motoren Werke Aktiengesellschaft, 80809 München (DE)
(72) Erfinder: ENDERS, Martin, 82041 Deisenhofen (DE)
(86) Internationale Anmeldenummer: PCT/EP2014/052021
(87) Internationale Veröffentlichungsnummer: WO 2014/122088

(56) Entgegenhaltungen:
- US-A1- 2011 214 162

## Beschreibung

Die Erfindung betrifft ein Verfahren zum Erkennen von Möglichkeiten der Verbesserung der Bedienung eines Fahrzeugs, eine Vorrichtung und ein Computerprogramm zu demselben Zweck.

Heutzutage ist die interaktive Darstellung von Bedienungsanleitungen durch elektronische Geräte bekannt. Die einzelnen Hinweise der Bedienungsanleitung können dabei entsprechend dem Fortschritt der Bedienung aufgerufen werden. Ist ein Hinweis nicht ausführbar kann dies durch den Benutzer rückgemeldet werden, worauf die interaktive Bedienungsanleitung dann reagieren kann.

Ein Fahrer eines Kraftfahrzeugs, beispielsweise eines PKW, hat häufig während einer Fahrt nicht die Möglichkeit die Bedienung von Funktionen des Fahrzeugs in einer Bedienungsanleitung nachzuschlagen. Die Fahraufgabe lässt dazu keinen Raum, da die Aufmerksamkeit des Fahrers dem Verkehrsgeschehen zugewendet werden muss.

Die Druckschrift US 2011/0214162 A1 offenbart eine Vorrichtung zum Bereitstellen der kooperativen Aktivierung oder Deaktivierung von Benutzereingabeoptionen. Diese empfängt einen erste Benutzereingabe bezüglich der Aktivierung oder Deaktivierung einer Benutzereingabeoption basierend auf Kontextinformationen, die sich auf eine lokale Vorrichtung beziehen. Ferner empfängt die Vorrichtung eine zweite Benutzereingabe bezüglich der Aktivierung oder Deaktivierung einer Benutzereingabeoption basierend auf Kontextinformationen, die sich auf eine entfernte Vorrichtung beziehen. Die Benutzereingabeoptionen der lokalen Vorrichtung werden aktiviert oder deaktiviert abhängig von der ersten und zweiten Benutzereingabe.

Aufgabe an den Fachmann ist es, dem Fahrer eines Kraftfahrzeugs die Bedienung seines Fahrzeugs zu erläutern.

Die Aufgabe wird durch das Verfahren nach Anspruch 1, die Vorrichtung nach Anspruch 9 und das Computerprogramm nach Anspruch 10 gelöst. Vorteilhafte Weiterbildungen sind in den abhängigen Ansprüchen definiert.

In einem Aspekt umfasst das Verfahren zum Erkennen von Möglichkeiten der Verbesserung der Bedienung eines Fahrzeugs: Empfangen einer Angabe der Bedienmöglichkeiten des Fahrzeugs; Aufzeichnen von Bedienaktionen, die am Fahrzeug vorgenommen werden; Bestimmen der vom Bediener gewünschten Wirkung für jede Bedienaktion oder Gruppen von aufgezeichneten Bedienaktionen; Identifikation von einer aufgezeichneten Bedienaktion oder einer Gruppe von aufgezeichneten Bedienaktionen, deren gewünschte Wirkung unter Nutzung der Bedienmöglichkeiten des Fahrzeugs durch eine andere Bedienaktion oder eine Gruppe anderer Bedienaktionen auf verbesserte Art erreicht werden kann; Ausgeben eines Hinweises auf die eine andere Bedienaktion oder auf die Gruppe anderer Bedienaktionen.

Ein Fahrer eines Kraftfahrzeugs sollte, wie oben dargestellt seine Aufmerksamkeit während einer Fahrt dem Verkehrsgeschehen widmen und hat so keine Gelegenheit die Bedienungsanleitung des Kraftfahrzeugs zu konsultieren. Dementsprechend wird der Fahrer, um eine Funktion zu bedienen oder eine gewisse Bedienwirkung zu erreichen, wenn ihm die korrekte oder am besten geeignete Bedienung nicht geläufig ist, verschiedene Bedienaktionen auszuprobieren um die gewünschte Wirkung zu erreichen. Ein Fahrer, der im Winter beispielsweise das Lenkrad am Anfang einer Fahrt aufwärmen möchte, könnte die Luftauslässe der Klimatisierung auf das Lenkrad richten und die Temperatur der angeforderten Luft hoch einstellen. Dies obwohl sein Fahrzeug beispielsweise über eine Lenkradheizung verfügt. Die Gruppe von Bedienaktionen, nämlich das Ausrichten der Luftauslässe auf das Lenkrad und das Hochstellen der Temperatur, werden als Bedienaktionen aufgezeichnet. Zu diesen wird die gewünschte Wirkung, nämlich das Aufheizen des Lenkrads erkannt und die vorteilhaftere andere Bedienaktion des Einschaltens der Lenkradheizung identifiziert. Diese vorteilhaftere andere Bedienaktion wird dann dem Fahrer mitgeteilt. Gegebenenfalls kann auch die genaue Ausführung der Bedienaktion erläutert werden. Die Ausgabe des Hinweises an den Fahrer kann nach Abschluss der Fahrt erfolgen, so dass der Fahrer von seiner Fahrtaufgabe nicht abgelenkt wird. Dies gilt ebenfalls für die Identifikation und das Bestimmen der gewünschten Wirkung.

Ein weiteres Beispiel für die Möglichkeit einer verbesserten Nutzung von Bedienmöglichkeiten kann im Zusammenhang mit dem Beheizen einer Frontscheibe (auch Windschutzscheibe genannt) eines Fahrzeugs auftreten. Fahrern von Fahrzeugen mit beheizbarer Frontscheibe kann diese Funktion ihres Fahrzeugs nicht bekannt sein. In bestimmten Situationen im Winter kann durch den Fahrer die Lüftung und Heizung auf die Windschutzscheibe eingestellt werden, beispielsweise um Beschlag durch Feuchtigkeit zu verhindern oder um Eis auf der Scheibe aufzutauen. Diese Bedienaktion gegebenenfalls zusammen mit der Außentemperatur oder einer Erkennung des Beschlags oder des Eises auf der Frontscheibe wird aufgezeichnet. Aus dieser Aufzeichnung heraus wird der Wunsch des Fahrers erkannt, eben die Frontscheibe zu heizen. Für diese Wirkung wird dann die Beheizbarkeit der Frontscheibe als vorteilhaftere Bedienaktion identifiziert und dem Fahrer mitgeteilt.

Die Angabe der Bedienmöglichkeiten des Fahrzeugs können Informationen zu den Funktionen des Fahrzeugs und deren Aktivierung sein.

Das Erreichen der Wirkung auf verbesserte Art bezieht sich somit insbesondere darauf, für die gewünschte Wirkung eine explizite Funktion beziehungsweise Bedienmöglichkeit des Fahrzeugs zu identifizieren.

In einer Weiterbildung umfasst das Verfahren das Aufzeichnen und Zuordnen von Umweltbedingungen und/oder Betriebszuständen des Fahrzeugs zu den jeweiligen aufgezeichneten Bedienaktionen, insbesondere die Außentemperatur und/oder eine erkannte Fahrinstabilität; wobei das Bestimmen der vom Bediener gewünschten Wirkung die bei der Bedienaktion oder Gruppe von Bedienaktionen aufgetretene und aufgezeichnete Umweltbedingung und/oder die Betriebszustände berücksichtigt. Auf diese Weise werden zusätzliche Informationen gewonnen, durch die auf die vom Fahrer des Fahrzeugs gewünschte Wirkung rückgeschlossen werden kann. In dem obigen Beispiel des Aufwärmens des Lenkrads beispielsweise könnte zu den Bedienaktionen des Ausrichtens der Luftauslässe und der Temperatureinstellung noch die Außentemperatur aufgezeichnet werden, sowie die bisherige Dauer der Fahrt. Dies ermöglicht eine verbesserte Bestimmung der gewünschten Wirkung.

In einer anderen Weiterbildung werden die Bedienmögüchkeiten des Fahrzeugs durch die Ausstattung des Fahrzeugs bestimmt und das Empfangen der Bedienmöglichkeiten wird in der Form des Empfanges der Angabe der Ausstattung des Fahrzeugs realisiert. Es wird also beispielsweise aus einer im Fahrzeug vorhandenen Sonderausstattung auf die Funktionen und Bedienmöglichkeiten des Fahrzeugs rückgeschlossen. Dabei wird die Ausstattung des Fahrzeugs über das Internet empfangen, in Antwort auf eine Eingabe einer Fahrzeugidentifikation, insbesondere der Fahrgestellnummer des Fahrzeugs. Typischerweise speichern die Hersteller von Fahrzeugen zu den Fahrgestellnummern der hergestellten Fahrzeuge, die in dem zugehörigen Fahrzeug verbauten Sonderausstattungen und auch Grundausstattungen. Dieses Wissen kann zur komfortablen Eingabe der Ausstattungen genutzt werden. Darüber hinaus werden auf diese Art auch Fehler vermieden, die durch eine unrichtige Eingabe der Bedienmöglichkeiten entstehen könnten.

Typische Bedienaktionen sind das Drücken von Schaltern, das Drehen von Knöpfen oder das Treffen von Auswahlen.

In einer Weiterbildung umfasst das Verfahren: Abrufen von Informationen, insbesondere Wetter- oder Umweltbedingungen, von einer entfernten Stelle, insbesondere aus dem Internet, für den zumindest ungefähren Zeitpunkt der Bedienaktion; Wobei das Bestimmen der vom Bediener gewünschten Wirkung die abgerufenen Wetter- oder Umweltbedingungen berücksichtigt. Auf diese Weise kann die Identifikation einer Bedienaktion oder einer Gruppe von Bedienaktionen, die verbessert ausgeführt werden können, durch Zusatzinformationen unterstützt werden, die unter Umständen auch nicht von Sensoren des Fahrzeugs festgestellt werden können.

In einer Weiterbildung des Verfahrens würde das Ausführen der einen anderen Bedienaktion oder der Gruppe anderer Bedienaktionen zur Aktivierung einer oder mehrerer Funktionen des Fahrzeugs führen, d.h. die gewünschte Wirkung wird durch die Aktivierung einer oder mehrerer Funktionen erreicht. Das Verfahren umfasst in dieser Weiterbildung ferner: Aktivieren der einen oder der mehreren Funktionen des Fahrzeugs, insbesondere nach einem Anbieten der Aktivierung an den Bediener und dem Empfangen einer Bestätigung der Aktivierung von dem Bediener. Auf diese Weise wird dem Bediener nicht nur ein Hinweis gegeben, sondern gegebenenfalls auf eine sprachliche Anfrage durch das Fahrzeug hin, die Funktion (oder die Funktionen) zur Erzielung der gewünschte Wirkung aktiviert. Der Bediener kann die Bestätigung der Aktivierung per Spracheingabe oder per haptischer Bedienung vornehmen. Die Aktivierung kann besonders vorteilhaft bereits während der Fahrt des Fahrzeugs erfolgen, insbesondere kurz nachdem die Bedienaktionen empfangen wurden, beispielsweise nach 1s, 5 s, weniger als 10 s oder weniger als 1 Minute.

In einem anderen Aspekt umfasst eine Vorrichtung eine elektronische Recheneinheit, und die Vorrichtung ist dazu eingerichtet, eines der oben beschriebenen Verfahren auszuführen. Vorteilhafterweise ist die Vorrichtung ein mobiles Endgerät wie ein Smartphone. Dieses kann das Verfahren ausführen und dem Fahrer nach Abschluss der Fahrt und auf Anforderung durch den Fahrer, der die Fahrt durchgeführt hat und das mobile Endgerät benutzt, die Hinweise ausgeben. Der Fahrer kann so einen für ihn geeigneten Ort und geeignete Zeit bestimmen, wann der die Hinweise zu einer verbesserten Nutzung präsentiert haben möchte.

In wieder einem anderen Aspekt umfasst ein Computerprogramm Anweisungen zum Ausführen eines der oben dargestellten Verfahren. Das Computerprogramm kann Anweisungen umfassen, die einen Computer bei Ausführung der Anweisungen zum Ausführen eines der oben genannten Verfahren veranlasst.

### DETAILLIERTE BESCHREIBUNG EINES AUSFÜHRUNGSBEISPIELS

Gemäß einem Ausführungsbeispiel verbindet sich ein Smartphone mit einem Kraftfahrzeug. Das Smartphone führt eine App, also eine Software aus, die einen Datentransfer zwischen Smartphone und Kraftfahrzeug ermöglicht. Weiterhin ist das Smartphone dazu eingerichtet, die Fahrgestellnummer durch eine Benutzereingabe zu empfangen. Mithilfe dieser Fahrgestellnummer ruft das Smartphone die Daten des Fahrzeugs zu Ausstattungen, insbesondere Sonderausstattungen, ab und schließt daraus auf die vorhandenen Bedienmöglichkeiten. Während einer Fahrt des Fahrzeugs übermittelt dieses kontinuierlich Bedienaktionen des Fahrers oder eines anderen Passagiers zusammen mit Umfeldbedingungen, wie Temperatur und ähnlichem, an das Smartphone, dass diese aufzeichnet. Nach dem Ende der Fahrt besteht für den Fahrer oder den Benutzer des Smartphones allgemein die Möglichkeit die Auswertung zu aktivieren. Das Smartphone identifiziert dann Bedienhandlungen die verbessert ausgeführt werden können. Dies betrifft insbesondere "Umgehungslösungen", also Fälle, in denen der Fahrer die ihm zu Verfügung stehenden Funktionen und deren Bedienung nicht kannte und sich anders beholfen hat. Dabei berücksichtigt das Smartphone auch die Umfeldbedingungen, die den Kontext für die gewünschte Wirkung geben. Das Ergebnis der Analyse wird dem Benutzer in Form von Hinweisen präsentiert, die beispielsweise die Funktion und Bedienung einer Sonderausstattung erklären.

Weitere Beispiele zur Ausführung der Erfindung können sein:
Ein Fahrzeug verfügt über eine Wischautomatik für die Scheibenwischer, die je nach Benetzung der Scheibe und Niederschlag unterschiedlich intensiv beziehungsweise schnell arbeitet. Während einer Fahrt schaltet der Fahrer die Scheibenwischer regelmäßig an und wieder aus, was durch das Smartphone aufgezeichnet wird. Für die gewünschte Wirkung wird die Wischautomatik als das geeignetere Mittel identifiziert und dem Fahrer ein entsprechender Hinweis ausgegeben, gegebenenfalls nach der Fahrt.

Ein Fahrzeug verfügt über eine Lichtautomatik, die das Tagfahrlicht stets aktiviert und bei schlechten Lichtverhältnissen, beispielsweise Nachts, auf das übliche Abblendlicht umschaltet. Der Fahrer, dem diese Funktion nicht bekannt ist, nimmt nun manuell Einstellungen am Licht vor, die denen entsprechen, die auch die Lichtautomatik vornehmen würde. Dieses Verhalten kann aus den aufgezeichneten Bedienaktionen erkannt werden und dem Fahrer ein entsprechender Hinweis auf die Automatik ausgegeben werden. Ein Fahrzeug verfügt über ein manuelles Schaltgetriebe und/oder eine Anti-Schlupf-Regelung (manchmal auch Dynamic Stability Control genannt) für die angetriebenen Räder. Bei dem Versuch sich aus einer eingeschneiten Parkplatz zu manövrieren kommt es nach einem Ansteigen der Drehzahl des Motors aufgrund der durchdrehenden Antriebsräder häufig zu einem Eingreifen der Anti-Schlupf Regelung. Die Bedienaktionen und der Betriebszustand des Motors und der Anti-Schlupf-Regelung wird erkannt und dem Fahrer Hinweise gegeben, wie das Fahrzeug vorteilhaft aus einem verschneiten Parkplatz manövriert werden kann, beispielsweise durch das verwenden eines höheren Gangs und/oder dem Deaktivieren der Anti-Schlupf-Regelung.

Weiterhin können zur der Identifikation der Bedienaktion, die verbessert ausgeführt werden kann, zusätzlich Informationen zu Umwelt- oder Wetterbedingungen aus dem Internet abgerufen werden. Vorliegend beispielsweise die Information über die Höhe der Schneedecke.

Ein Fahrzeug kann über eine Schließautomatik verfügen, bei der durch Drücken eines Knopfes am Türgriff das Fahrzeug verriegelt wird. Vor der Verriegelung muss jedoch erst überprüft werden, ob sich der Fahrzeugschlüssel im Innenraum befindet, was eine gewisse Zeit, beispielsweise 1 s, in Anspruch nimmt. Zur Verriegelung muss der Knopf am Türgriff somit mindestens 1 s gedrückt gehalten werden. Betätigt der Fahrer nun den Knopf mehrmals kurz, kann durch die Aufzeichnung dieses Verhaltens darauf geschlossen werden, dass das Fahrzeug verriegelt werden soll. Es kann so ein langes Halten des Knopfes als verbesserte Bedieneingabe identifiziert werden und dem Benutzer zusammen mit einem Hinweis auf den Grund der Drückdauer (Überprüfung, dass der Schlüssel außerhalb des Fahrzeugs ist) mitgeteilt werden.

Ein Fahrzeug verfügt über ein Spracheingabesystem mit dem verschiedene Funktionen des Fahrzeugs aktiviert werden können. Der Fahrer tätigt während einer Fahrt Spracheingaben, die nicht zum gewünschten Ziel führen, und von einer manuellen (haptischen) Eingabe gefolgt werden. Dies kann in der Aufzeichnung erkannt werden, und dem Fahrer der korrekte Sprachbefehl, der für die manuelle Eingabe eigentlich verwendet wird, präsentiert werden.

## Patentansprüche

1. Verfahren zum Erkennen von Möglichkeiten zur Verbesserung der Bedienung eines Fahrzeugs, umfassend:
Empfangen einer Angabe der Bedienmöglichkeiten des Fahrzeugs;
Aufzeichnen von Bedienaktionen, die am Fahrzeug vorgenommen werden;
Bestimmen der vom Bediener gewünschten Wirkung für jede Bedienaktion oder Gruppen von aufgezeichneten Bedienaktionen;
**gekennzeichnet durch**:
Identifikation von einer aufgezeichneten Bedienaktion oder einer Gruppe von aufgezeichneten Bedienaktionen, deren gewünschte Wirkung unter Nutzung der Bedienmöglichkeiten des Fahrzeugs durch eine andere Bedienaktion oder eine Gruppe anderer Bedienaktionen auf verbesserte Art erreicht werden kann;
Ausgeben eines Hinweises auf die eine andere Bedienaktion oder auf die Gruppe anderer Bedienaktionen.

2. Verfahren nach Anspruch 1 ferner umfassend:
Erfassen des Endes einer Fahrt des Fahrzeugs, wobei der oder die Schritte des Ausgebens des Hinweises und/oder der Identifikation und/oder des Bestimmens nach einem erfassten Ende einer Fahrt des Fahrzeugs ausgeführt werden.

3. Verfahren nach einem der vorhergehenden Ansprüche ferner umfassend:
Aufzeichnen und Zuordnen von Umweltbedingungen und/oder Betriebszuständen des Fahrzeugs zu den jeweiligen aufgezeichneten Bedienaktionen, insbesondere Temperatur und/oder erkannte Fahrinstabilität;
Wobei das Bestimmen der vom Bediener gewünschten Wirkung die bei der Bedienaktion oder Gruppe von Bedienaktionen aufgetretene und aufgezeichnete Umweltbedingung und/oder Betriebszustände des Fahrzeugs berücksichtigt.

4. Verfahren nach einem der vorhergehenden Ansprüche, wobei die Bedienmöglichkeiten des Fahrzeugs durch die Ausstattung des Fahrzeugs bestimmt wird und wobei das Empfangen der Bedienmöglichkeiten in der Form des Empfanges der Angabe der Ausstattung des Fahrzeugs ist.

5. Verfahren nach Anspruch 4, wobei die Ausstattung des Fahrzeugs über das Internet empfangen wird, in Antwort auf eine Eingabe einer Fahrzeugidentifikation, insbesondere der Fahrgestellnummer des Fahrzeugs.

6. Verfahren nach einem der vorhergehenden Ansprüche, wobei Bedienaktionen das Drücken von Schaltern, das Drehen von Knöpfen oder das Treffen von Auswahlen umfassen.

7. Verfahren nach einem der vorhergehenden Ansprüche, ferner umfassend:
Abrufen von Informationen, insbesondere Wetter- oder Umweltbedingungen, von einer entfernten Stelle, insbesondere aus dem Internet, für den zumindest ungefähren Zeitpunkt der Bedienaktion;
Wobei das Bestimmen der vom Bediener gewünschten Wirkung die abgerufenen Informationen berücksichtigt.

8. Verfahren nach einem der vorhergehenden Ansprüche,
Wobei das Ausführen der einen anderen Bedienaktion oder der Gruppe anderer Bedienaktionen zur Aktivierung einer oder mehrerer Funktionen des Fahrzeugs führen würde;
Wobei das Verfahren ferner umfasst:
Aktivieren der einen oder der mehreren Funktionen des Fahrzeugs, insbesondere nach einem Anbieten der Aktivierung an den Bediener und dem Empfangen einer Bestätigung der Aktivierung von dem Bediener.

9. Vorrichtung, umfassend eine elektronische Recheneinheit, wobei die Vorrichtung dazu eingerichtet ist, eines der vorstehend genannten Verfahren auszuführen.

10. Computerprogramm, umfassend Anweisungen zum Ausführen eines der Verfahren nach den Ansprüchen 1 bis 8.

## Claims

1. A method for detecting possibilities for improving the operator control of a vehicle, said method comprising the steps of:
receiving an indication of the operator control possibilities of the vehicle;
recording operator control actions which are performed at the vehicle;
determining the effect desired by the operator for each operator control action or groups of recorded operator control actions;
**characterised by**
identifying a recorded operator control action or a group of recorded operator control actions of which the desired effect can be achieved in an improved way with use of the operator control possibilities of the vehicle by means of another operator control action or a group of other operator control actions;
outputting an indication of the one other operator control action or of the group of other operator control actions.

2. A method according to claim 1, also comprising the step of:
detecting the end of a journey of the vehicle, wherein the step or steps of outputting the indication and/or the identification and/or the determination are/is performed after the end of a journey of the vehicle has been detected.

3. A method according to any one of the preceding claims, further comprising the step of:
recording and assigning ambient conditions and/or operating states of the vehicle to the respective recorded operator control actions, more especially temperature and/or identified driving instability;
wherein the determination of the effect desired by the operator takes into consideration the ambient condition and/or operating states of the vehicle that occurred and were/was recorded during the operator control action or group of operator control actions.

4. A method according to any one of the preceding claims, wherein the operator control possibilities of the vehicle are determined by the equipment of the vehicle, and wherein the operator control possibilities are received in the form of the receipt of the indication of the equipment of the vehicle.

5. A method according to claim 4, wherein the equipment of the vehicle is received via the Internet, in response to an input of a vehicle identification, more especially the chassis number of the vehicle.

6. A method according to any one of the preceding claims, wherein operator control actions comprise the pushing of switches, the turning of knobs, or the making of selections.

7. A method according to any one of the preceding claims, further comprising the step of:
retrieving information, more especially weather or ambient conditions, from a remote location, more especially from the Internet, for the at least approximate point in time of the operator control action;
wherein the determination of the effect desired by the operator takes into consideration the retrieved information.

8. A method according to any one of the preceding claims,
wherein the execution of the one other operator control action or the group of other operator control actions would lead to the activation of one or more functions of the vehicle;
wherein the method also comprises the step of:
activating the one or more functions of the vehicle, more especially after an offering of the activation to the operator and the receipt of a confirmation of the activation from the operator.

9. A device, comprising an electronic computing unit, wherein the device is designed to carry out one of the above-mentioned methods.

10. A computer program, comprising instructions for carrying out one of the methods according to claims 1 to 8.

## Revendications

1. Procédé permettant d'identifier des possibilités d'amélioration de la conduite d'un véhicule comprenant des étapes consistant à :
recevoir une indication concernant les possibilités de conduite du véhicule,
enregistrer des actions de conduite qui sont proposées sur le véhicule, déterminer l'effet souhaité par le conducteur pour chaque action de conduite ou groupe d'actions de conduite enregistré(es),
**caractérisé par** des étapes consistant à :
identifier une action de conduite enregistrée ou un groupe d'actions de conduite enregistré dont l'effet souhaité en utilisant les possibilités de conduite du véhicule peut être atteint(e) d'une façon améliorée par une autre action de conduite ou un groupe d'autres actions de conduite, délivrer en sortie une indication concernant l'autre action de conduite ou le groupe d'autres actions de conduite.

2. Procédé conforme à la revendication 1,
comprenant en outre une étape consistant à :
détecter la fin d'un déplacement du véhicule, la ou les étape(s) consistant à délivrer l'indication et/ou à effectuer une identification et/ou à effectuer une détermination étant effectuée(s) après la détection de la fin d'un déplacement du véhicule.

3. Procédé conforme à l'une des revendications précédentes, comprenant en outre des étapes consistant à :
enregistrer et associer des conditions d'environnement et/ou des états de conduite du véhicule aux actions de conduite respectivement enregistrées, en particulier la température et/ou l'instabilité de déplacement identifiée,
la détermination de l'effet souhaité par le conducteur tenant compte des conditions d'environnement et/ou des états de conduite du véhicule se présentant et enregistré(e)s lors de l'action de conduite ou du groupe d'actions de conduite.

4. Procédé conforme à l'une des revendications précédentes,
selon lequel les possibilités de conduite du véhicule sont déterminées par l'équipement du véhicule et la réception des possibilités de conduite est effectuée sous la forme de la réception de l'indication de l'équipement du véhicule.

5. Procédé conforme à la revendication 4,
selon lequel l'équipement du véhicule est reçu par internet en réponse à l'entrée d'une identification du véhicule, en particulier du numéro de châssis du véhicule.

6. Procédé conforme à l'une des revendications précédentes,
selon lequel les actions de conduite comprennent l'actionnement de commutateurs, la rotation de boutons ou la mise en oeuvre de sélection.

7. Procédé conforme à l'une des revendications précédentes, comprenant en outre une étape consistant à :
consulter des informations, en particulier des conditions météorologiques ou d'environnement provenant d'un lieu éloigné, en particulier d'internet pour l'instant au moins approximatif de l'action de conduite, la détermination de l'effet souhaité par le conducteur tenant compte des informations consultées.

8. Procédé conforme à l'une des revendications précédentes,
selon lequel
la mise en oeuvre de l'autre action de conduite ou du groupe d'autres actions de conduite a été effectuée pour activer une ou plusieurs fonction(s) du véhicule,
le procédé comprenant en outre une étape consistant à :
activer la ou les fonction(s) du véhicule en particulier après une offre d'activation pour le conducteur et la réception de la confirmation de l'activation par le conducteur.

9. Dispositif comprenant une unité de calcul électronique, ce dispositif étant réalisé pour permettre la mise en oeuvre du procédé susmentionné.

10. Programme d'ordinateur comprenant des instructions pour permettre la mise en oeuvre d'un procédé conforme aux revendications 1 à 8.
